(19) Europäisches Patentamt
European Patent Office
Office européen des brevets

(11) **EP 2 952 259 A1**

(12) **EUROPEAN PATENT APPLICATION**

(43) Date of publication:
**09.12.2015 Bulletin 2015/50**

(51) Int Cl.:
***B03D 1/02*** *(2006.01)* ***G01N 21/75*** *(2006.01)*
***G01N 21/25*** *(2006.01)*

(21) Application number: **14171471.7**

(22) Date of filing: **06.06.2014**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ABB Research Ltd.**
**8050 Zürich (CH)**

(72) Inventors:
- **Kramer, Axel**
  **5430 Wettingen (CH)**
- **Paul, Thomas Alfred**
  **8820 Wädenswil (CH)**
- **de Salles Leal Filho, Laurindo**
  **01410-000 São Paulo-SP (BR)**
- **Barrios, Marco**
  **03344-015 - Sao Paulo-SP (BR)**

(74) Representative: **ABB Patent Attorneys**
**C/o ABB Schweiz AG**
**Intellectual Property (CH-LC/IP)**
**Brown Boveri Strasse 6**
**5400 Baden (CH)**

# (54) Method and apparatus for froth flotation process using optical measurements

(57) The present invention relates to a method of optical measurement of parameters of a froth flotation substance (10) involved in a froth flotation process, the froth flotation substance (10) with collector molecules, the method comprising the steps of: adding in a predetermined amount indicator molecules to the froth flotation substance (10), wherein the indicator molecules are adapted for specifically binding to the collector molecules, said binding involving a detectable change of an optical absorption spectrum of said indicator molecules; hereinafter measuring by means of measurement light said optical absorption spectrum; and hereinafter determining from the measured part of the optical absorption spectrum of said indicator molecules an amount or a concentration of residual collector molecules in the froth flotation substance (10). Moreover, the invention relates to the froth flotation substance (10) itself, to a system (1) for executing said method, and to a use of the method and the system for controlling the froth flotation process, *e.g.,* by addition of collector molecules to the froth flotation substance (10).

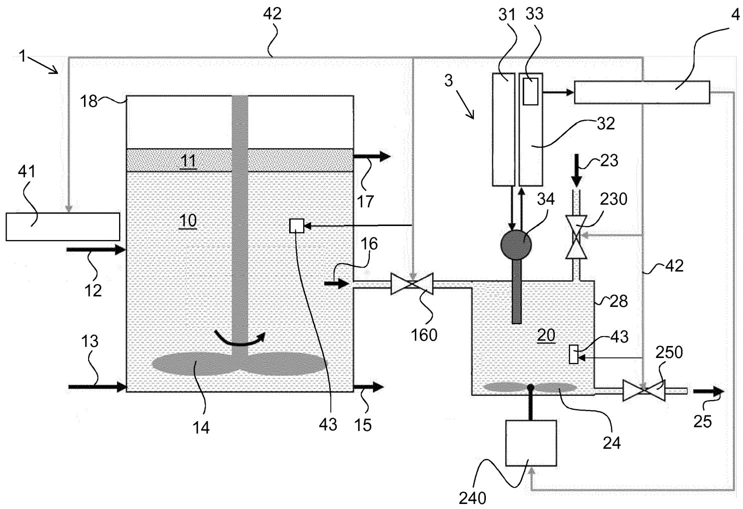


FIG.1

EP 2 952 259 A1

## Description

TECHNICAL FIELD

The present invention relates to a method of optical measurement of a parameter of a froth flotation substance according to claim 1, to a system for carrying out said method and for controlling the flotation process on the basis of said measured parameter, and to such a froth flotation substance.

PRIOR ART

Froth flotation is a widely used method in mineral process industry for concentrating a specific mineral from ore, while depressing unwanted material (gangue). The method allows mining of low-grade and complex ore bodies that otherwise would have been ignored due to lack of profitability.

In a common flotation cell, ground ore is fed as an aqueous pulp into a vessel that has an impeller in it. Air bubbles are blown through the pulp and rise to the liquid surface. The underlying separation of minerals is based on a physico-chemical process, which is based on the wettability of the mineral surface. By adding chemical agents acting as collectors to the pulp, the desired mineral particles are selectively rendered hydrophobic. Collectors increase the natural hydrophobicity of a target surface, increasing the separability of hydrophobic and hydrophilic particles. The hydrophobic mineral particles in the pulp will preferentially attach to the air bubbles which, in turn, lift them to the liquid surface. There, a froth layer builds up, which is then skimmed to harvest the concentrate, while the wetted gangue material remains in the liquid pulp phase. This procedure is commonly applied consecutively in several steps using a flotation cell line and a combination of lines to a flotation circuit to increase the yield.

The chemical dosage of collector molecules is crucial in this process and the amount of concentration of collector molecules which are not attached to mineral particles (*i.e.*, residual collector) is a valuable process parameter for automated control to optimize the separation process, in particular by reducing excess chemicals.

In order to run and control a flotation circuit, disturbances which will have a negative effect on the process, may preferably be excluded or their influence minimized. An accurate knowledge about a quantitative composition of the materials involved in the froth flotation process is of importance, since a mineral supply with constant mineral composition cannot be guaranteed. An important process parameter in this respect is the mass content of the specific minerals and the overall solid fraction, which commonly is monitored by using an on-line X-ray fluorescence analyzer (XRF). Besides this analytical parameter, other properties are monitored, such as air flow rate, froth level and thickness, slurry and/or collector flow rate at specific positions in the circuit. This information is typically used as input to control and optimize a flotation circuit.

However, for controlling a conventional froth flotation plant little in-situ measurement information about the chemical composition of the solid/liquid mixture is available. For example, the efficiency of a flotation process is dependent on the amount and type of added chemicals. For process control it is beneficial that chemical properties of the pulp can be measured online directly (*e.g.*, residual collector concentration) or indirectly (*e.g.,* surface tension of the flotation solution).

In WO 2012/110284 A2 a froth flotation system is disclosed that contains an in-situ sensor (a surface tensiometer) combined with an advanced control system.

For a controlling flotation process in an optimal way, rapid and reliable information about the chemical properties of the pulp, *i.e.* the froth flotation substance, is vital. Such chemical properties may be collector concentration, surface tension, or pH. Typically, these parameters are acquired by sampling the slurry periodically and analyzing the samples in the laboratory. The problem of such an off-line method is that it is costly and time consuming (order of hours). Existing online analysis methods such as XRF and LIBS (laser-induced break-down spectroscopy) are also costly; they require high implementation effort, highly skilled personnel, and intensive maintenance. The problem of not having available low-cost, robust online analyzers for measuring important parameters still exists for minerals analysis, in particular in the area of froth flotation processes.

SUMMARY OF THE INVENTION

It is therefore an object of the present invention to further optimize an operational efficiency of a froth flotation process. In particular, valuable control parameters of the froth flotation substance are made available by the present invention for optimizing a controllability of the overall froth flotation processes.

This object is achieved by a method with the features according to claim 1.

Accordingly, the object is solved by a method of optical measurement of parameters of a froth flotation substance involved in a froth flotation process, the froth flotation substance comprising collector molecules, the collector molecules being adapted for binding to mineral particles contained within the froth flotation substance for increasing a hydrophobicity

of a surface of said mineral particles, the method comprising the steps of:

(a) adding in a predetermined amount indicator molecules to at least part of the froth flotation substance , the indicator molecules being preferably a collector substance staining dye, wherein said indicator molecules are adapted for specifically binding to the collector molecules within the froth flotation substance, and wherein the indicator molecules are chosen such that a binding reaction between said indicator molecules and the collector molecules involves a detectable change (e.g. a spectral shift) of an optical absorption spectrum of said indicator molecules; hereinafter
(b) measuring by means of measurement light from a light emitting unit at least part of said optical absorption spectrum of said indicator molecules within the froth flotation substance; and hereinafter
(c) determining from the measured part of the optical absorption spectrum of said indicator molecules an amount or a concentration of residual collector molecules in the froth flotation substance.

This amount or a concentration of residual collector molecules in the froth flotation substance may preferably be used for process control of the flotation process.

The term "predetermined amount" is to be understood as an amount that makes the measurement according to invention feasible.

The term "collector molecules" refers to one or more chemical additives commonly used for improving an overall yield of the froth flotation process, in particular by chemically modifying the hydrophobicity of the mineral particles, i.e. the ground ore bodies.

The term "indicator molecules" refers to one or more chemical additives specifically adapted to bind to the collector molecules, while at least part of an optical absorption spectrum of the indicator molecules undergoes a detectable change when bound to the target substance.

The term "froth flotation substance" refers to the process liquid and comprises, depending on the context, ground ore, a solvent, collector molecules, and possibly further chemical additives, and/or indicator molecules.

The term "detectable change" refers to a change in the absorption spectrum which is detectable by means of known optical instrumentation. It can relate to a shift of a maximum of the spectrum, a shift of weight of the spectrum from one part of the spectrum to another part, a shift of the entire spectrum, or a complete or partial loss or gain of spectral density in the spectrum or any combination thereof.

The term "residual collector molecules" refers to collector molecules which have not been associated with a particular mineral particle but remain freely suspended in the pulp, *i.e.* in the froth flotation substance. These residual collector molecules may be regarded as excess chemicals; accordingly, for optimizing the flotation process, it is advantageous to keep the amount of residual collector molecules at a suitable minimum, to reach the best process performance.

Accordingly, it is an aspect of the present invention to exploit an absorption spectrum shifting binding process between the indicator molecules and the collector molecules for the purpose of optimizing efficiency and/or controllability of a froth flotation process, the latter being designed for concentrating a target mineral from a froth flotation substance. In other words, it is an aspect of the invention to provide for a preferably continuous or quasi-continuous optical measurement and monitoring of residual collector concentration of the pulp (at-line or online). The measurement system is based on an optical absorption of the indicator molecules, in particular of dye molecules, which are added to the slurry and which specifically bind to the residual collector molecules. The binding reaction then involves a spectral shift of the optical absorption of the indicator molecules. Measuring a light intensity transmitted along an optical path through the optionally at least partly particle-cleared measurement region of a sample of the pulp. Preferably light with a specific wavelength range is used such that a spectral absorption change in the absorption spectrum of the indicator molecules is significant and results in a detectable signal which is representative of the residual collector concentration.

Preferably, after or during said adding step (a) and before said measurement step (b), the froth flotation substance is mixed, preferably stirred, in a (mixing) step (a1) during a first time interval, said first time interval being long enough for achieving a predetermined distribution of the indicator molecules in the froth flotation substance and for the binding reaction between said indicator molecules and said collector molecules to be effective. A proper mixing, *e.g.* with known stirring means, further ensures reliable measurement results and, at the same time, efficient use of any added chemical agent and component of the slurry.

A length of the first time interval depends on the binding process involved between the indicator and collector molecules. Moreover, said length or duration also depends on the time it takes for achieving a desired degree of homogeneity by means of step (a1), the latter depending on the volume and consistency of the froth flotation substance. Accordingly, someone skilled in the art may determine, on the basis of the specific circumstances, appropriate values or materials for the herein described purposes.

Exemplarily for igneous phosphate ore as mineral particles the Berol 867 from Akzo Nobel, a long-chain sarcosinate bearing an amino acid functional group (see below), may be used as collector molecule. As indicator molecules in this case it has been found that Coomassie® Brilliant Blue G-250 (see below) is an appropriate indicator molecule.

The first time interval may range from 30 seconds to 1 hour, preferably from 1 minute to 30 minutes, more

preferably from 1.5 minutes to 15 minutes.

If the pulp with the mineral particles is too opaque for the light measurement according to invention, then, before step (b), at least part of the mineral particles may be selectively kept from and/or removed from a measurement region within the froth flotation substance, in which measurement region an optical path of the measurement light is contained. This allows for an effective transmittance of at least part of the measurement light through the froth flotation substance along the optical path to a sensor unit for measuring the transmitted light signal.

Preferably, said keeping of at least part of said mineral particles from said measurement region is done by filtering and/or separation with selective filtering or separation elements. These filters may be installed in front of the optics. Alternatively, if a sample of the process liquid is transferred to a sample chamber for measurement, the filter elements may also be installed to filter out at least part of the particles during or before the transfer. Accordingly, the filter elements may selectively filter out solid mineral particles, while residual or particle free collector and indicator molecules (*i.e.* collector and/or indicator molecules not bound to any mineral particle, but possibly bound to each other or not) are substantially not filtered and may substantially freely pass said filter elements; accordingly, the collector and indicator molecules are available for the optical measurement.

Alternatively or additionally, said keeping of at least part of said mineral particles from said measurement region is done by separation with the separation elements. *E.g.* a hydrocyclone may be used as a separation element to clear at least a part of the optical path of the measurement path through the froth flotation substance such as to allow effective transmittance of at least part of the measurement light. Alternatively or additionally, said removing of at least part of said mineral particles from said measurement region of the slurry may also be done by separation elements, *e.g.* by means of a hydrocyclone, or by sedimentation of the solid mineral particles during a second time interval, the second time interval being long enough for a sedimentation process of suspended mineral particles in the froth flotation substance to be effective.

A separation can be achieved by using a hydrocyclone. Using this device the mineral particles are separated from the water/chemicals solution resulting in measurement conditions which are not or only minimally disturbed by optical scattering and absorption caused by particles.

By selectively filtering and/or removing solid particles (and not any free collector and indicator-collector complexes), the measurement region is at least partly cleared from mineral particles such as to ensure a light transmittance along the optical path which is sufficient for the optical measurement according to invention.

Preferably, the second time interval, if any, ranges from 15 Minutes to 60 Minutes, more preferably from 5 Minutes to 30 Minutes, most preferably from 1 Minute to 15 Minutes.

Preferably, the optical measurement is a pulsed measurement using light pulses with pulse rates in a range from 0.001 Hz to 10 MHz and pulse lengths in a range from 0.001 Microsecond to 10 Seconds.

Preferably, the optical measurement is quasi-continuous, preferably with measurement intervals being separated by 1 Minute to 10 Minutes, more preferably by 5 Minutes, or wherein the optical measurement is a continuous measurement.

Preferably, the measurement light emitted by the light emitting unit has a spectral width between 0.1 Nanometer and 100 Nanometers and/or an intensity of 0.1 Microwatt and 100 Milliwatts.

Preferably, at least two light wavelength ranges, preferably two light wavelengths of the measurement light (*e.g.* blue and red) are measured in step (b) and evaluated in step (c) for the determination of the amount or of the concentration of the residual collector molecules in the froth flotation substance from the measured part of the optical absorption spectrum of said indicator molecules.

Preferably, the selection of the at least two light wavelength ranges is chosen such as to have at least one first light wavelength range substantially within the absorption spectrum of the bound indicator molecules, wherein a difference between the first light wavelength range and a maximum of the absorption spectrum of the bound indication molecules is preferably less than 50 Nanometers and/or to have at least one second light wavelength range substantially within the absorption spectrum of the unbound indicator molecules, wherein a difference between the second light wavelength range and a maximum of the absorption spectrum of the unbound indication molecules is preferably less than 50 Nanometers and/or to have at least one third light wavelength range substantially outside the absorption spectrum of the (bound and unbound) indicator molecules, the latter light wavelength range measurement being usable for compensating for absorption changes which are not due to absorption effects of the indicator molecules..

Preferably, the optical measurement is an at-line and/or an online measurement and/or a transmittance or a reflectance of the measurement light is determined from which the amount or the concentration of the collector molecules in the froth flotation substance is deduced.

Preferably, an optical measurement system comprising a light emitting unit and a sensor unit is used. Said optical measurement system is preferably calibrated before the optical measurement is performed. Said calibration is preferably done with at least two or more test concentrations, *i.e.* with substances comprising a known collector concentration and an effective amount of indicator molecules. Preferably, there is at least one or more indicator molecules per collector molecule. The test substances having a known collector molecule concentration provide a reference for

the determination of the amount or the concentration of the residual collector molecules in the froth flotation substance from the measured part of the optical absorption spectrum of said indicator molecules.

In method of measurement as described above the optical absorption spectrum of said indicator molecules is preferably measured at a plurality of predetermined locations within one or a plurality of froth flotation cells representing a froth flotation cell system, the froth flotation process taking place within said froth flotation cell system.

The above-defined object is also achieved by a system with the features according to claim 9.

Accordingly, a froth flotation cell system for controlling a froth flotation process is presented, the froth flotation cell system comprising:

at least one froth flotation cell adapted for maintaining the froth flotation process with a froth flotation substance comprising collector molecules and indicator molecules, the indicator molecules being preferably a collector substance staining dye, wherein said indicator molecules are adapted for specifically binding to collector molecules within the froth flotation substance, and wherein the indicator molecules are chosen such that a binding reaction between said indicator molecules and said collector molecules involves a detectable spectral shift of an optical absorption spectrum of said indicator molecules;

the froth flotation cell system further comprising an optical measurement system characterized in that said optical measurement system comprises:

at least one light emitting unit adapted for emitting measurement light into said froth flotation substance, at least part of said measurement light being in the optical absorption spectrum of the indicator molecules bound to collector molecules,

at least one sensor unit adapted for measuring at least part of an optical absorption spectrum of said indicator molecules from measurement light that has passed through or was reflected by said froth flotation substance;

an analyzer unit configured to determine an amount or a concentration of residual collector molecules in the froth flotation substance from the measured part of an optical absorption spectrum of said indicator molecules; and

a control unit for controlling said froth flotation process, the control unit being configured to control *e.g.* an addition of collector molecules to the froth flotation substance on the basis of the determined concentration of the collector molecules and by means of a feed control unit.

The control unit is adapted for controlling on the basis of the signal from the analyzer unit.

Accordingly, the froth flotation cell system is configured to carry out the above described method according to invention.

Preferably, said optical measurement system is configured to measure at least two light wavelength ranges such as to have at least one first light wavelength range substantially within the absorption spectrum of the bound indicator molecules, wherein a difference between the first light wavelength range and a maximum of the absorption spectrum of the bound indication molecules is preferably less than 50 Nanometers (first measurement channel) and/or to have at least one second light wavelength range substantially within the absorption spectrum of the unbound indicator molecules, wherein a difference between the second light wavelength range and a maximum of the absorption spectrum of the unbound indication molecules is preferably less than 50 Nanometers (second measurement channel) and/or to have at least one third light wavelength range substantially outside the absorption spectrum of the indicator molecules, the latter light wavelength range measurement being usable for compensating for absorption changes which are not due to absorption effects of the indicator molecules (reference channel).

Preferably, the first and second light wavelength ranges may be separated from each other for detection purposes:

by alternating between optical measurement with the first light wavelength range and the second light wavelength range and time-gated detection; and/or

by means of amplitude modulation of different frequency for the first light wavelength range and the second light wavelength range, respectively, and frequency-filtered detection, and/or

by optical frequency filtering (*e.g.*, bandpass filter or long-pass filter) of a sensor unit signal.

Accordingly, the froth flotation cell system, in particular the light emitting unit and/or the sensor unit may be adapted to alternating between an optical measurement with the first light wavelength range and the second light wavelength range; and/or

are adapted for different amplitude modulation for of first light wavelength range and the second light wavelength range, and/or

are adapted for frequency filtering of a sensor unit signal.

The froth flotation cell system as described herein may preferably have an optical measurement system which is optionally adapted to measure with pulsed measurement light. Hence, the light emitting unit may be used that is adapted to be operated in pulsed and/or continuous mode.

Typical pulse rates for the light pulses range from 0.001 Hz to 10 MHz, more preferably from 0.1 Hz to 100 kHz, and most preferably from 100 Hz to 10 kHz.
and pulse lengths in a range from 0.001 Microsecond to 10 Microseconds, more preferably from 0.1 Microsecond to 0.1 Second, and most preferably from 0.1 Millisecond to 1 Millisecond.

Moreover, if the optical measurement system is adapted for measuring in two distinct and separated wavelength ranges (*e.g.* for providing a reference channel) the light emitting unit or the sensor unit or both may be adapted for selectively emit or detect in the different wavelength ranges.

The froth flotation cell system as described herein may further comprise at least one or a plurality of additional sensor systems, said additional sensor systems being adapted to measure parameters of the froth flotation substance selected from a group including said optical absorption, a dynamic surface tension, a temperature, a viscosity, and a pH and preferably more parameters. Accordingly, the additional sensors of the same or a different type may be used for complementing the data set. A more complete data set allows for better control of the overall process.

It is preferred that the froth flotation cell system as described above has optical measurement systems and/or further sensor units placed at various locations in the entire froth flotation cell system. It is thus an aspect of the present invention to perform provide the optical measurement system such that it is possible to measure at multiple locations simultaneously. Thereby more precise information about a spatial distribution of the measurement parameter within one or more flotation cells may be gained. Preferably, said measurement locations cover strategically important locations in the entire flotation cell line/circuit including inlet or outlet regions. A circuit includes at least one or a plurality of fluidly connected flotation cells.

Moreover, the option to measure at various locations is particularly interesting for flotation circuits with multiple vessels or cells as the composition of the froth flotation substance typically changes from cell to cell, *i.e.* between different process stages. The present invention improves a controllability of such a froth flotation plant.

Accordingly, it is a further aspect of the present invention to optionally provide not only one optical measurement system comprising a light emitter and a light detector and measuring a single measurement region, but to have a plurality of such light emitters and detectors distributed over the flotation circuit in order to probe at further and strategically relevant locations like chemicals entry or tailings exit regions. This allows gaining a more complete picture over the froth flotation system and thus making possible an improved control of the overall flotation process.

The optical measurement system preferably has an optical interface with the froth flotation substance to be measured.

The term "light emitter" or "light emitter unit" refers to a light producing entity like an LED or a laser device or another light source or emitter; alternatively, it may also refer to a light guide region wherefrom light is coupled out for the measuring purposes as herein described.

It is an aspect of the present invention that the froth flotation cell system as described above preferably has optical interfaces in the optical path of the measurement light which are preferably regularly cleaned. Such cleaning may be done by means for intermittently activated ultrasonic vibrations/bursts acting on the optical interface, by means of wipers, and/or by means for generating purging jets of a cleaning fluid directed onto said optical interfaces for effectively removing accumulated dirt layers. Accordingly, it is an aspect of the present invention to provide cleaning means for cleaning interfaces within the optical path of the measurement from deposited layers as described above. This ensures an optimal efficiency of the light transmission through the optical interfaces. Furthermore, it also avoids measurement errors, since intensity changes are attributed to absorption changes and thus concentration changes of residual collector molecules.

The method as described above or the froth flotation cell as described above may be used for determining the amount or the concentration of residual collector molecules in the froth flotation substance and using this information of the amount or concentration for process control of the flotation process, preferably for controlling an amount of added collector molecules to a froth flotation substance in a froth flotation process, wherein said controlling is preferably based on model predictive control. Typically, such a model predictive control setup is based on a dynamic model, measurements of at least one relevant parameter (or an estimate thereof), and an objective function to be optimized. Additionally, constraints may be imposed.

The method as described above or the froth flotation cell as described above may be also used for calibration of further measurement tools by relating a determined amount or concentration of residual collector molecules to further parameters of the froth flotation substance, the parameter being preferably a surface tension of the froth flotation substance. Such a tool to be calibrated may be a surface tensiometer.

The above object is also achieved by a froth flotation substance involved in a froth flotation process and having the features according to claim 15.

Accordingly, said froth flotation substance comprises collector molecules and indicator molecules, said indicator

molecules being preferably a collector substance staining dye, wherein said indicator molecules are adapted for specifically binding to collector molecules within the froth flotation substance, and wherein a binding reaction between said indicator molecules and said residual collector molecules involves a detectable change of an optical absorption spectrum of said indicator molecules.

BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,

Fig. 1 shows a schematic drawing of a first embodiment of a froth flotation cell system according to the present invention with an online optical measurement system for determining a collector concentration and a control system for controlling it;

Fig. 2 shows an exemplary calibration curve for collector concentration using real flotation solutions with comparatively a large collector concentration range;

Fig. 3 shows a further exemplary calibration curve for collector concentration using real flotation solutions with comparatively small collector concentration range;

Fig. 4 shows a more detailed schematic drawing of the embodiment according to Fig. 2; the measurement setup has an optical probe inserted into the pulp; an optical absorption is measured at 590 nm using a transflection probe; an LED light source and a sensor unit are adapted to the absorption maximum of the complex Berol 867/Coomassie® Brilliant Blue G-250;

Fig. 5 shows a schematic drawing of a second embodiment of the froth flotation cell system according to the present invention; a measurement setup with optical flow through cell is shown, the optical absorption is measured at 590 nm using a flow cell; an LED light source and detector are adapted to the absorption maximum of the complex Berol 867/Coomassie® Brilliant Blue G-250;

Fig. 6 shows a schematic setup with an optical reference channel, where BS: blue light source, BRD: blue light reference detector, BD: blue light detector, RS: red light source, RRD: red light reference detector, RD: red light detector, BSP: beam splitter, DM: dichroic mirror, F: filters; and

Fig. 7 shows a flow diagram of a Model Predictive Control scheme for the flotation process.

DESCRIPTION OF PREFERRED EMBODIMENTS

Preferred embodiments of the invention are described below.

A Bradford assay (*cf., e.g.* [Bradford 1976]) is a photometric method for a quantitative determination of proteins down to concentrations of micrograms per milliliter. The method relies on the binding of a dye Coomassie® Brilliant Blue (G250) (see below) to target protein. Free ionic forms of a red variant of the dye show maximum absorption at 465 nm, free ionic forms of a green variant show maximum absorption at 650 nm. In contrast, the bound dye exhibits a significantly different absorption spectrum, *i.e*. a maximum absorption at 595 nm, resulting in a blue form. Thus, the quantity of protein can be estimated by determining the amount of dye in the blue ionic form. This may be achieved by measuring the absorbance of the probe solution at 595 nm.

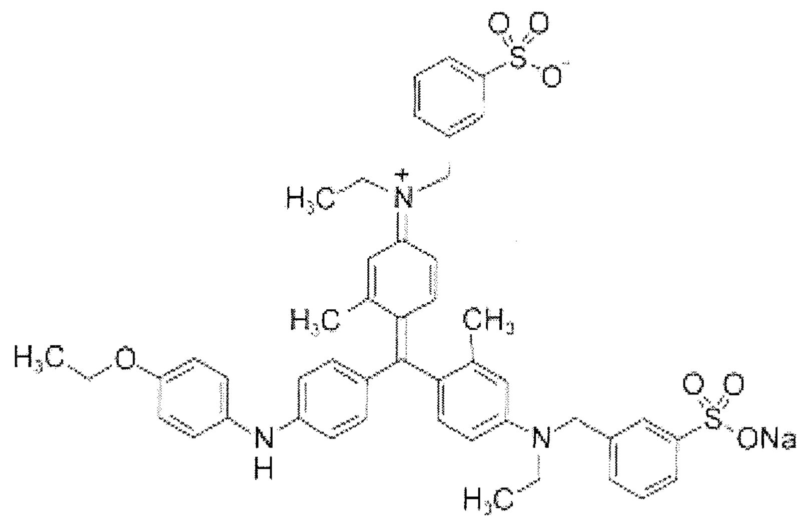

Structure 1, showing a dye molecule (Coomassie® Brilliant Blue).

***Collector concentration measurement principle:***

According to a preferred embodiment of the present invention the dye molecule is chosen from the Coomassie® Brilliant Blue group *(cf.* structure 1 above). It was found that Coomassie® Brilliant Blue binds to certain collector molecules which are applied in froth flotation processes and therefore, Coomassie® Brilliant Blue is a suitable indicator molecule. In this embodiment the collector molecule may be a long-chain sarcosinate bearing an amino acid functional group (*cf.* structure 2 below, *e.g.* Berol 867 from Akzo Nobel). This collector molecule may be used for increasing the hydrophobicity of igneous phosphate particles. These collector molecule react with Coomassie® Brilliant Blue when added to a forth flotation substance 20 (*cf.* Fig. 1). This binding reaction between the collector and the indicator molecule results in a detectable shift in the absorption spectrum of the indicator molecule.

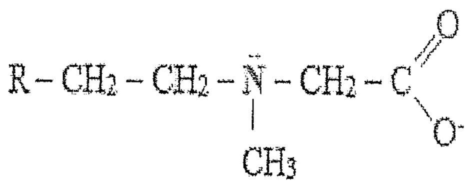

Structure 2, showing an alkyl sarcosinate molecule.

It was found that there is no negative interference on the absorption spectrum shift caused by other chemicals which are typically contained in a commercial collector product or which are added to the flotation solution (such as ethoxylated nonyl phenol, calcium, magnesium and corn starch).

The indicator molecule binding process is comparatively fast, it virtually completes in approximately two minutes with good color stability for one hour.

The absorption measurement at a certain wavelength can be described by the Lambert-Beer law, which relates the absorbance $A_{\lambda 1}$ and a dye concentration c (molar density) in a linear law:

$$A_{\lambda 1} = -\log(I_{1,\lambda 1} / I_{0,\lambda 1}) = \varepsilon(\lambda 1) \times \ell \times c$$

where $A_{\lambda 1}$ is the absorbance at the certain wavelength of light (λ1), $I_{1,\lambda 1}$ is the intensity of the radiation (light) that has passed through the material (transmitted radiation), and $I_{0,\lambda 1}$ is the intensity of the radiation before it passes through the material (incident radiation). The parameter ε represents the molar absorptivity (molar extinction coefficient) of the dye, the parameter $\ell$ the distance the light travels through the liquid (*i.e.*, the path length). By measuring the intensity ratio or absorbance the concentration can be calculated.

Moreover, this linear relation allows a 2-point calibration of the optical measurement system.

***Collector concentration determination:***

Prior to the application of an optical measurement system 3 of a froth flotation cell system 1 (*cf.* Fig. 1) in the froth flotation process, the optical measurement system 3 preferably is calibrated. A calibration curve of solutions with known concentrations of collector molecules and a fixed amount of said dye is shown in **Figures 2** and **3** (preferably at least two different collector concentrations are measured). In the examples shown a lab spectrometer device was used to analyze the absorbance. A linear calibration curve is fitted to the four measurement points that were acquired. Using the thus derived calibration function, the absorbance value of a solution with unknown collector concentration can be related to a concentration value. The two exemplary calibration curves for different concentration ranges were measured, as shown in Figs. 2 and 3, both yield a very good fit quality ($R^2$=0.96). Here also, Coomassie® Brilliant Blue G-250 was used as indicator molecules and Berol 867 from Akzo Nobel as collector molecules.

***Flotation control:***

**Figure 1** shows schematic circuit of the froth flotation cell system 1 with one flotation cell 18 containing the froth flotation substance 10. The froth flotation substance 10 comprises ground ore particles, a solvent, and collector molecules. Further chemical agents may be in the substance 10. A froth layer 11 is floating on the pulp 10 and may be skimmed to harvest the ore concentrate.

The flotation cell 18 comprises an ore/chemical inlet 12, a gas inlet 13 and a tailings outlet 15. A main agitator 14 is acting as stirring means.

Furthermore, a concentrate outlet 17 is provided for extracting the froth 11. The optical measurement system 3 and further sensor systems 43 (*e.g.* temperature or pH sensor units or the like) are placed in system 1. Finally, a sample outlet 16 with a sample outlet valve 160 for controlling the outlet 16 is included.

Through said sample outlet 16, process liquid 10 may be controllably transferred into a sample chamber 28 for at-line measurements. The sample chamber 28 comprises a sample substance 20 drawn from substance 10 from cell 18 through sample outlet 16 into chamber 28. The sample chamber 28 further comprises an indicator molecule inlet 23 with a valve 230 for controlled inlet of indicator molecules into the sample liquid 20. The sample chamber 28 includes a further agitator 24 with a further agitator drive 240 for properly mixing the sample liquid 20 with the added indicator molecules. The sample chamber 28 has a sample liquid outlet 25 with a control valve 250.

Since the mixing of the slurry 10 inside the flotation cell 18 and/or the substance 20 in the sample chamber 28 will not result in an ideal homogeneous distribution of particles, water and surfactants, it is also part of the invention to install the further sensor systems 43 (a sensor system measures one or more surface chemistry relevant parameters, such as optical absorption and dynamic surface tension, temperature, viscosity, pH, etc.) in one or both of the chambers 18, 28. Further sensors (*e.g.* temperature sensors) may be placed outside the chambers 18, 28.

The advantage of placing several sensor systems 3 of the same kind at different locations results in a better picture of the process. This procedure allows for averaging the signals and thus a more efficient feedback control of the process is possible.

Having different additional sensor systems 43 makes available more information about the overall process and improves the controllability of the process in system 1.

The optical measurement system 3 comprises a light emitting unit 31 with a transflection probe 35 and, for detection and analyzing purposes, a sensor unit 32 with an analyzer unit 33. The light emitting unit 31 comprises a light emitting diode 310 and an LED driver 311. Other light emitters or sensors may be used.

The system 1 further comprises a control unit 4 with a feed control unit 41 and connections 42, connecting the control elements and the optical measurement system 3 and the additional sensor systems 43, if any, for controlling the flotation process. The control unit 4 is adapted to control the valves 160, 230, 250 and the feed control unit 41 via the connections 42. These connections 42 may be physical links or wireless connections. Pump systems may be used, where necessary, for the control action.

The resulting signal from the optical measurement system 3 related to the collector concentration parameter is, after analysis by an analyzer unit 33 (*cf.* Fig. 1), provided to the control unit 4 as control values. These control values may be used to actively control the process for maintaining or improving its efficiency.

A preferred control action is the regulation of dosage of chemicals, in particular of collector molecules, and adjusting the desired additive concentrations in the flotation bath 10.

Figure 1 shows schematically the entire setup with the flotation cell 18, measurement cell 28, optical setup 3 and control system 4. In this embodiment, the following steps are carried out for determining the concentration of collector:

- calibration of the optical measurement system 3 with at least two test substances with known collector concentrations;

- taking a sample 20 from the flotation vessel 18 into the measurement vessel 28 by operating the respective valves 160 (and pumps if required);
- adding the proper amount of dye solution (Coomassie® Brilliant Blue G-250 in water) to the flotation solution in the measurement vessel 28 by means of the dosage valve 230;
- activate the stirrer 24 to homogeneously mix the dye and the flotation solution 20 (the binding reaction to the collector molecule takes place typically in the minutes time frame);
- stop stirrer 24 and wait for sedimentation of the grains in the liquid 20;
- measure the optical absorption at various wavelength (dye absorption wavelength and reference non-absorption wavelength); and
- determine from absorption and reference signals the collector concentration using a pre-determined calibration function.

The above listed steps can be performed automatically by using a control system 4 operating switches, actuators like pumps and valves. Thus, the system 1 will measure automatically, online and quasi-continuously (*e.g.* in intervals of 5 minutes).

***Optical measurement setup:***

Preferred embodiments for the online optical measurement system 3 are shown in Figures 4 and 5 in connection with the sample chamber 28 as described above. The absorption measurement setup comprises an optical interface to the process liquid 20, *e.g.* a transflection or transmission device 35 (LEONI Fiber Optics or Solvias), a light emitting unit 31 (*e.g.* LED, Mightex FCS-590, $\lambda$=590 nm, FWHM$\approx$35 nm), a sensor unit 32 for the transmitted measurement light (Si photodiode, Thorlabs PDA-36A), and fiber-optic cables 314, 315 connecting the three components 31, 32, 35.

A schematic of the setup of a first embodiment is shown in Figure 4. The light emitter 31, including the LED driver 311 and LED 310, emits measurement light into the light guide 314 and into the transflection device 35. The latter guides the light into the process liquid 20. The process liquid 20 has been drawn from the froth flotation substance 10 in the main cell 18 and contains indicator molecules which were added through inlet 23 under control of dosage valve 230. An optical output from the transflection device 35, *i.e.* the measurement signal, is feed through the light guide 315 to the sensor unit 32. The signal from the sensor unit 32 is analyzed by the analyzer unit 33 (*cf.* Fig. 1), wherein the signal from the analyzer unit 33 is used by the control unit 4 as a control value for controlling the operating switches, actuators, and valves.

A schematic of the setup of a second preferred embodiment is shown in Figure 5. Here, in contrast to the first embodiment, the light from the light guide 314 is feed through a first collimator 312 into the sample liquid 20. The optical path runs through the sample liquid 20 to a second collimator 313 and is coupled into the second light guide 315.

Beside the realization using optical fibers it is also conceivable to realize the system without optical fibers having the light source and detector close to the process liquid.

***Compensation of turbidity and suspended solids:***

If the flotation solution 20 mixed with the indicator molecules is not transparent, *e.g.* due to light scattering processes at suspended mineral particles and since the optical interfaces of the measurement system are susceptible to undesired coating or sedimentary deposition, the following measures may be taken in order to minimize erroneous readings.

In general, transmission changes due to reasons other than absorption from collector/indicator complexes may happen; may preferably be compensated or entirely avoided. Measures to reduce disturbing effects are listed in the following:

(A) A selective filter can be installed in front of the optics filtering out solid particles which could decrease the transmitted signal, but which allows collector molecules and the indicator molecules to pass. The filter can permeate the liquid molecules but it rejects the small solid particles in the slurry 20.

(B) A cleaning mechanism may be used to prevent fouling of the optical interfaces (optical windows). Such a cleaning may *e.g.* be based on intermittently activated ultrasonic vibrations/bursts which act on the optical interface, to remove potential dirt layers. It could also be realized by wipers, purging jets (gas or liquid) of similarly acting means.

(C) Moreover, a measurement at a second wavelength (*e.g.* 800 nm, red channel) may be conducted in order to compensate for absorption changes which are not due to absorption of the complex collector/indicator, but due to scattering of suspended solids or due to changes in transmission of the optical path (*e.g.* window fouling). The absorption of Coomassie® Brilliant Blue at the wavelength of 800 nm is negligible while it is strong in the blue channel (see above). Therefore, a suitable reference of the transmission of the optical path can be acquired and this reference

signal may be used for compensation if transmission changes occur.

These measures (A), (B), (C) may be used individually or in any combination thereof.

***Reference channel for compensation of turbidity or coated optical surfaces:***

The above mentioned option (C) is now explained in more details. In order to secure a long-term performance of an optical monitor several factors that adversely affect the measurement may be considered:

- light source emission drift (wavelength and intensity, due to aging, internal and surrounding temperature)
- optical fiber transmission changes (due to bending losses, physical moving of fibers, stress, temperature)
- transmission change at optical connectors (physical moving, mechanical shock, vibration, stress, temperature)
- transmission change due to contamination of optical interfaces
- transmission change due to scattering at suspended solids in the liquid
- optical detector stability (aging)

The above mentioned issues can be mitigated by employing optical reference channels integrated into an electro-optic unit as is illustrated in Figure 6.

**Figure 6** shows a setup with an optical reference channel. It comprises a blue light source BS, a blue light reference detector BRD, a blue light detector BD, a red light source RS, a red light reference detector RRD, a red light detector RD, a beam splitter BSP, dichroic mirror DM, and filters F. Arrow 51 indicates a direction to the head sensor, arrow 52 a direction from the head sensor.

The blue light source BS, emitting light at around 595 nm (*i.e.* within the absorption band of Coomassie® Brilliant Blue, blue light is shown by dashed line in Fig. 7; arrows in Fig. 7 indicated the direction of light travel) is coupled to an optical fiber for delivering the light to an optical probe (sensor head) or is directly mounted to an optical feed-through for directing the light through an absorption path length of the sample liquid 20. Prior to being coupled into an optical fiber or an absorption path, a part of the light is split off using the optical beam splitter BSP onto a blue reference detector BRD which measures the stability of the emitted light intensity of the blue light source BS.

In order to eliminate artifacts in the transmitted signal (such as changes in fiber bending losses or the presence of particle contamination on the optical interfaces within the compartment, or light scattering at suspended solids in the liquid), a reference channel is used. Light at a red-shifted wavelength (shown as dotted line in Fig. 7) which is not absorbed by Coomassie® Brilliant Blue (or more generally: the indicator molecules), e.g. at $\lambda$ > 800 nm, emitted by a second light source (the red source RS) is used to interrogate the optical path for changes. The emission stability of the red source RS is recorded by the red reference detector RRD. The red and blue light is combined (*e.g.* by the dichroic mirror DM, combined light shown by dashed-dotted line in Fig. 7). The red light traverses the same optical path as the blue light, but is not absorbed by the presence of Coomassie® Brilliant Blue. When the red light returns from the sensor head, it is split off using a second dichroic mirror to the red light detector RD. In order to ensure that none of the red light falls onto the blue light detector BD and vice versa, a short and a long pass filter (F, $t_{SP}$), respectively, can be added (F, $t_{LP}$).

In another embodiment the separation of the signals can also be achieved by amplitude modulation of the light sources at different frequency, respectively, and frequency filtering of the detector signal. In this case the second dichroic beamsplitter DM and second detector RD can be avoided.

The ratio of the transmitted to emitted blue light intensity is related to the number density *N* of Coomassie® Brilliant Blue molecules in the absorption path (neglecting any offset intensity):

$$(I_{1,\lambda 1}/ I_{0,\lambda 1}) = \exp(-\varepsilon(\lambda 1) \times \ell \times c)$$

with $\varepsilon$ the absorption cross section of Coomassie® Brilliant Blue at the wavelength of the blue light source, $I_{0,\lambda 1}$ the intensity of the light before the beam enters the absorbing liquid, $l$ the absorption path length and $c$ the dye concentration (molar density). (In the formula below: $\varepsilon c$ is analogous to $\sigma N$).

However, $I_{0,\lambda 1}$ can vary due to the stability of the optical setup and hence one can use reference channels such as the blue reference detector BRD which measures the intensity $I^{(b)}_{ref}$. Thus one can calculate $I_0$' using the known transmittivity of the beam splitter $t_{BS}^{(b)}$:

$$I'_0 = t_{\mathrm{DM}}^{(b)} \frac{t_{\mathrm{BS}}^{(b)} I_{\mathrm{ref}}^{(b)}}{1 - t_{\mathrm{BS}}^{(b)}}$$

$I'_0$ is now the intensity of the blue light after the beam splitter and dichroic mirror and before entry into the optical system downstream. The parameter $t^{(b)}_{DM}$ is the transmittivity of the dichroic mirror for the blue light. The transmitted blue light reaching the blue detector BD will have been attenuated to $I^{(b)}_{tr}$:

$$I_{\mathrm{tr}}^{(b)} = t_{\mathrm{SP}} t_{\mathrm{DM}}^{(b)} \left[ (I'_0 - \Delta I_{\mathrm{op1}}^{(b)}) e^{-\sigma l N} - \Delta I_{\mathrm{op2}}^{(b)} \right]$$

after having passed the optical path to the dye containing liquid (that introduces an intensity loss $\Delta I^{(b)}_{op1}$) through the absorption length (which introduces an intensity loss $(I'_0 - \Delta I^{(b)}_{op1})e^{-\sigma lN}$) and the optical path back to the electro-optic unit (which introduces a loss $\Delta I^{(b)}_{op2}$) and passage through the dichroic mirror and short pass filter of transmittivity $t_{DM}$ and $t_{SP}$, respectively.

Using the red light reference channel, one can obtain an estimate for $\Delta I^{(b)}_{op1} + \Delta I^{(b)}_{op2}$ which one needs to determine the number density of Coomassie® Brilliant Blue from $I^{(b)}_{tr}$, *i.e.* the net transmitted blue light intensity. For the red channel

$$I_{\mathrm{tr}}^{(r)} = t_{\mathrm{LP}} r_{\mathrm{DM}}^{(r)} \left[ \frac{r_{\mathrm{DM}}^{(r)} t_{\mathrm{BS}}^{(r)} I_{\mathrm{ref}}^{(r)}}{1 - t_{\mathrm{BS}}^{(r)}} - \Delta I_{\mathrm{op1}}^{(r)} - \Delta I_{\mathrm{op2}}^{(r)} \right],$$

where $r^{(r)}_{DM}$ is the reflectivity of the dichroic mirror for the red light and $t_{LP}$ the transmittivity of the long-pass filter. However, from this measurement one cannot distinguish $\Delta I^{(r)}_{op1}$ from $\Delta I^{(r)}_{op2}$ and hence one can make the assumption that they are equal, $\Delta I^{(r)}_{op1} = \Delta I^{(r)}_{op2} = \Delta I^{(r)}_{loss}$. Further, there may be a wavelength dependence on the losses, *i. e.* $k(\Delta I^{(r)}_{op1} + \Delta I^{(r)}_{op2}) = 2k\Delta I^{(r)}_{loss} = 2\Delta I^{(b)}_{loss}$. The conversion factor $k$ one can obtain from a calibration measurement in which the absorption length does not contain any Coomassie® Brilliant Blue.

Hence,

$$I_{\mathrm{tr}}^{(b)} = t_{\mathrm{SP}} t_{\mathrm{DM}}^{(b)} \left[ (I'_0 - \Delta I_{\mathrm{op1}}^{(b)}) e^{-\sigma l N} - \Delta I_{\mathrm{loss}}^{(b)} \right]$$

and

$$I_{\mathrm{tr}}^{(r)} = t_{\mathrm{LP}} r_{\mathrm{DM}}^{(r)} \left[ \frac{r_{\mathrm{DM}}^{(r)} t_{\mathrm{BS}}^{(r)} I_{\mathrm{ref}}^{(r)}}{1 - t_{\mathrm{BS}}^{(r)}} - \left(\frac{2}{k}\right) \Delta I_{\mathrm{loss}}^{(b)} \right]$$

Now, $\Delta I^{(b)}$loss can be expressed as

$$\Delta I_{\mathrm{loss}}^{(b)} = \frac{-k}{2} \left( \frac{I_{\mathrm{tr}}^{(r)}}{t_{\mathrm{LP}} r_{\mathrm{DM}}^{(r)}} - \frac{r_{\mathrm{DM}}^{(r)} t_{\mathrm{BS}}^{(r)} I_{\mathrm{ref}}^{(r)}}{1 - t_{\mathrm{BS}}^{(r)}} \right)$$

From this one can obtain the concentration of dye/collector complex molecules from the transmitted intensity, correcting for losses introduced in the optical paths and variations in the intensity of the light source:

$$I_{\mathrm{tr}}^{(b)} = t_{\mathrm{SP}} t_{\mathrm{DM}}^{(b)} \left\{ \left[ \frac{t_{\mathrm{DM}}^{(b)} t_{\mathrm{BS}}^{(b)} I_{\mathrm{ref}}^{(b)}}{1 - t_{\mathrm{BS}}^{(b)}} + \frac{k}{2} \left( \frac{I_{\mathrm{tr}}^{(r)}}{t_{\mathrm{LP}} r_{\mathrm{DM}}^{(r)}} - \frac{r_{\mathrm{DM}}^{(r)} t_{\mathrm{BS}}^{(r)} I_{\mathrm{ref}}^{(r)}}{1 - t_{\mathrm{BS}}^{(r)}} \right) \right] e^{-\sigma l N} + \frac{k}{2} \left( \frac{I_{\mathrm{tr}}^{(r)}}{t_{\mathrm{LP}} r_{\mathrm{DM}}^{(r)}} - \frac{r_{\mathrm{DM}}^{(r)} t_{\mathrm{BS}}^{(r)} I_{\mathrm{ref}}^{(r)}}{1 - t_{\mathrm{BS}}^{(r)}} \right) \right\}$$

A periodic, *i.e.* a pulsed, measurement is probably preferable to minimize temperature-induced drift effects on the light source. In this context, it is practical to alternate between the red and the blue channel. Then, by time-gated detection the red light detector RD, one dichroic mirror DM and the filters F can be omitted using just one common detector for both beams, given that detector sensitivity at the different wavelengths is similar and the ratio of those sensitivities is known.

It is to be understood that the red and blue channel are exemplary channels; other light channels may be used with at least one first light channel in the absorption band and at least one second channel substantially outside the absorption channel of the indicator molecules.

***Control loop:***

The control unit 4 collects all available information, mainly the concentration data from the optical measurement system 3, but also information from any further sensor units 43 installed, such as temperature sensors inside and outside the flotation cell 18, 28. This input information is processed such that an ore flow, a dosage of the chemicals such as the collector and indicator molecules, and other control variables are adjusted such that the mineral beneficiation process is running in an optimal way. The control system 4 itself can be based *e.g.* on Model Predictive Control (*cf.* Figure 7) which is explained in detail in reference [Gaulocher 2008].

Figure 7 shows a Model Predictive Control Scheme for Flotation Process which is done with ABB's expert optimizer and a 800xA control platform. Sensors 3, 43 collect data which is provided to a control platform and processed. After that, process state variables are estimated from the processed measurement data. After computation of optimal set-points by Model Predictive Control the set-points may be post-processed and then delivered via the control platform to the actuators for controlling the flotation process.

***Calibration method for a process surface tensiometer:***

The optical measurement method according to invention may be used as a lab calibration tool for relating the collector concentration to other parameters which provide information about the chemical condition of the slurry, such as the surface tension. In other words, the absorbance values in samples of known collector concentration can be used to correlate surface tensiometer readings to the respective collector concentrations. This is a straightforward way to calibrate robust process tensiometers.

***References:***

[Gaulocher 2008]: S. Gaulocher, E. Gallestey, and H. Lindvall, "Advanced process control of a froth flotation circuit", V International Mineral Processing Seminar, October 22-24, (2008), Santiago, Chile

[Bradford 1976]: Bradford, MM. (1976) A rapid and sensitive method for the quantification of microgram quantities of protein utilizing the principle of protein-dye-binding. Anal. Biochem. 72, 248-254.

LIST OF REFERENCE SIGNS

| | | | |
|---|---|---|---|
| 1 | froth flotation cell system | | |
| | | 3 | optical measurement system |
| 10 | froth flotation substance (pulp) | 31 | light emitting unit |
| 11 | froth | 310 | LED |
| 12 | ore/chemical inlet | 311 | LED driver |
| 13 | gas inlet | 312 | collimator |
| 14 | main agitator | 313 | collimator |
| 15 | tailings outlet | 314 | optical fiber |
| 16 | sample outlet | 315 | optical fiber |

(continued)

| | | | |
|---|---|---|---|
| 160 | sample outlet valve | 32 | sensor unit |
| 17 | concentrate outlet | 33 | analyzer unit |
| 18 | flotation cell | 35 | transflection probe |
| 20 | sample froth flotation substance | 4 | control unit |
| 23 | indicator molecule inlet | 41 | feed control unit |
| 230 | valve for 23 | 42 | connections |
| 24 | further agitator | 43 | additional sensor systems |
| 240 | further agitator drive | | |
| 25 | sample liquid outlet | 51 | direction to head sensor |
| 250 | valve for 25 | 52 | direction from head sensor |
| 28 | sample chamber | | |

## Claims

1. Method of optical measurement of parameters of a froth flotation substance (10) involved in a froth flotation process, the froth flotation substance (10) comprising collector molecules, the collector molecules being adapted for binding to mineral particles contained within the froth flotation substance (10) for increasing a hydrophobicity of a surface of said mineral particles, the method comprising the steps of:

   (a) adding in a predetermined amount indicator molecules to at least part of the froth flotation substance (10), the indicator molecules being preferably a collector substance staining dye, wherein said indicator molecules are adapted for specifically binding to the collector molecules within the froth flotation substance (10), and wherein the indicator molecules are chosen such that a binding reaction between said indicator molecules and the collector molecules involves a detectable change of an optical absorption spectrum of said indicator molecules; hereinafter
   (b) measuring by means of measurement light from a light emitting unit (31) at least part of said optical absorption spectrum of said indicator molecules within the froth flotation substance (10); and hereinafter
   (c) determining from the measured part of the optical absorption spectrum of said indicator molecules an amount or a concentration of residual collector molecules in the froth flotation substance (10).

2. Method of measurement according to the preceding claim, wherein, after step (a) and before step (b), the froth flotation substance (10) is mixed, preferably stirred, in a step (a1) during a first time interval, said first time interval being long enough for achieving a predetermined distribution of the indicator molecules in the froth flotation substance (10) and for the binding reaction between said indicator molecules and said collector molecules to be effective.

3. Method of measurement according to any one of the preceding claims, wherein, before step (b), at least part of the mineral particles are selectively kept from and/or removed from a measurement region within the froth flotation substance (10), in which measurement region an optical path of the measurement light through the froth flotation substance (10) is contained, such as to allow effective transmittance of at least part of the measurement light through the froth flotation substance (10) along the optical path to a sensor unit (32) for measuring the light, wherein preferably said keeping of mineral particles from said measurement region is done by filtering and/or separation with filtering or separation elements, and
   said removing of mineral particles from said measurement region being preferably done by using separation elements and/or by sedimentation during a second time interval, the second time interval being long enough for a sedimentation process of suspended mineral particles in the froth flotation substance (10) to be effective,
   respectively.

4. Method of measurement according to any one of the preceding claims, wherein for the determination of the amount or the concentration of the residual collector molecules in the froth flotation substance (10) from the measured part of the optical absorption spectrum of said indicator molecules at least two light wavelength ranges, preferably two light wavelengths of the measurement light are measured in step (b) and evaluated in step (c).

5. Method of measurement according to the preceding claim, wherein the selection of the at least two light wavelength

ranges is chosen such as to have at least one first light wavelength range substantially within the absorption spectrum of the bound indicator molecules, wherein a difference between the first light wavelength range and a maximum of the absorption spectrum of the bound indication molecules is preferably less than 50 Nanometers and/or to have at least one second light wavelength range substantially within the absorption spectrum of the unbound indicator molecules, wherein a difference between the second light wavelength range and a maximum of the absorption spectrum of the unbound indication molecules is preferably less than 50 Nanometers and/or to have at least one third light wavelength range substantially outside the absorption spectrum of the indicator molecules, the latter light wavelength range measurement being usable for compensating for absorption changes which are not due to absorption effects of the indicator molecules.

**6.** Method of measurement according to any one of the preceding claims, wherein the optical measurement is an at-line and/or an online measurement and/or wherein a transmittance or a reflectance of the measurement light is determined from which the amount or the concentration of the collector molecules in the froth flotation substance (10) is determined.

**7.** Method of measurement according to any one of the preceding claims, wherein an optical measurement system comprising the light emitting unit (31) and the sensor unit (32) and an analyzer unit (33) are calibrated before the optical measurement is performed, preferably with at least one, preferably at least two or more test substances, each test substance having a known collector molecule concentration and an amount of indicator molecules which is larger than the amount of collector molecules, in order to provide a reference for the determination of the amount or the concentration of the residual collector molecules in the froth flotation substance (10) from the measured part of the optical absorption spectrum of said indicator molecules.

**8.** A froth flotation cell system (1) for controlling a froth flotation process, the froth flotation cell system (1) comprising:

at least one froth flotation cell (18) adapted for maintaining the froth flotation process with a froth flotation substance (10) comprising collector molecules and indicator molecules, the indicator molecules being preferably a collector substance staining dye, wherein said indicator molecules are adapted for specifically binding to collector molecules within the froth flotation substance (10), and wherein the indicator molecules are chosen such that a binding reaction between said indicator molecules and said collector molecules involves a detectable change of an optical absorption spectrum of said indicator molecules;
the froth flotation cell system (1) further comprising an optical measurement system (3) **characterized in that** said optical measurement system (3) comprises:

at least one light emitting unit (31) adapted for emitting measurement light into said froth flotation substance (10), at least part of said measurement light being in the optical absorption spectrum of the indicator molecules bound to collector molecules,
at least one sensor unit (32) adapted for measuring at least part of an optical absorption spectrum of said indicator molecules from measurement light;
an analyzer unit (33) configured to determine an amount or a concentration of residual collector molecules in the froth flotation substance (10) from the measured part of an optical absorption spectrum of said indicator molecules; and
a control unit (4) for controlling said froth flotation process, the control unit (4) being configured to control an addition of collector molecules to the froth flotation substance (10) on the basis of the determined concentration of the collector molecules and by means of a feed control unit (41).

**9.** The froth flotation cell system (1) according to the preceding claim, wherein the optical measurement system (3) is configured to measure at least two light wavelength ranges, said at least two light wavelength ranges comprising each at least one light wavelength and being chosen such as to have at least one first light wavelength range substantially within the absorption spectrum of the bound indicator molecules, wherein a difference between the first light wavelength range and a maximum of the absorption spectrum of the bound indication molecules is preferably less than 50 Nanometers and/or to have at least one second light wavelength range substantially within the absorption spectrum of the unbound indicator molecules, wherein a difference between the second light wavelength range and a maximum of the absorption spectrum of the unbound indication molecules is preferably less than 50 Nanometers and/or to have at least one third light wavelength range substantially outside the absorption spectrum of the indicator molecules, the latter light wavelength range measurement being usable for compensating for absorption changes which are not due to absorption effects of the indicator molecules..

**10.** The froth flotation cell system (1) according to the preceding claim, wherein the first and second light wavelength ranges are separated from each other:

by alternating between optical measurement with the first light wavelength range and the second light wavelength range and time-gated detection; and/or
by means of amplitude modulation of different frequency for the first light wavelength range and the second light wavelength range, respectively, and frequency-filtered detection, and/or
by optical frequency filtering of a sensor unit (32) signal.

**11.** The froth flotation cell system (1) according to any one of the claims 8 to 10, wherein the optical measurement system (3) is adapted to measure with pulsed measurement light.

**12.** The froth flotation cell system (1) according to any one of the claims 8 to 11, wherein froth flotation cell system (1) further comprises at least one or a plurality of additional sensor systems (43), said additional sensor systems being adapted to measure parameters of the froth flotation substance (10) selected from a group including said optical absorption, a dynamic surface tension, a temperature, a viscosity, and a pH value and/or wherein optical measurement systems and/or further sensor units are placed at various locations in the entire froth flotation cell system (1).

**13.** The froth flotation cell system (1) according to any one of the claims 9 to 12, being further adapted for having optical interfaces in the optical path of the measurement light regularly cleaned, preferably by means for intermittently activated ultrasonic vibrations/bursts acting on the optical interface, by means of wipers, and/or by means for generating purging jets of a cleaning fluid directed onto said optical interfaces for effectively removing accumulated dirt layers.

**14.** Use of the method according to any one of the claims 1 to 7 or use of the froth flotation cell system (1) according to any one of the claims 8 to 13
for determining the amount or the concentration of residual collector molecules in the froth flotation substance (10) and using this information for process control of the flotation process, preferably for controlling an amount of added collector molecules to a froth flotation substance in a froth flotation process, wherein said controlling is preferably based on model predictive control, and/or
for calibrating further measurement tools by relating a determined amount or concentration of residual collector molecules to further parameters of the froth flotation substance (10), the parameter being preferably a surface tension of the froth flotation substance (10).

**15.** A froth flotation substance (10) comprising collector molecules and indicator molecules, said indicator molecules being preferably a collector substance staining dye, wherein said indicator molecules are adapted for specifically binding to collector molecules within the froth flotation substance (10), and wherein a binding reaction between said indicator molecules and said residual collector molecules involves a detectable change of an optical absorption spectrum of said indicator molecules.

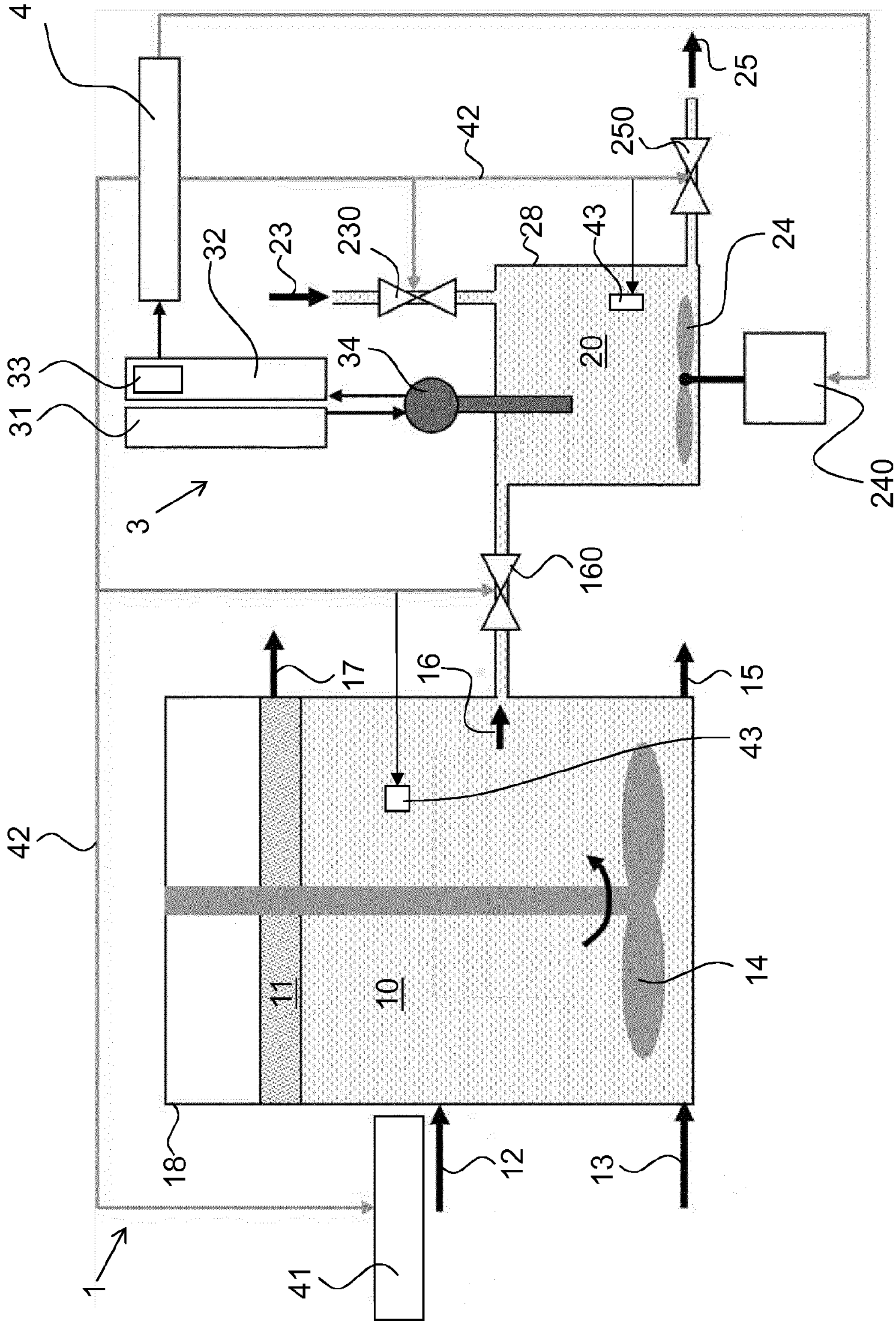
4
42
25
250
32
23
230
28
43
24
33
31
34
20
3
240
160
42
17
16
15
43
11
10
14
18
12
13
1
41

FIG.1

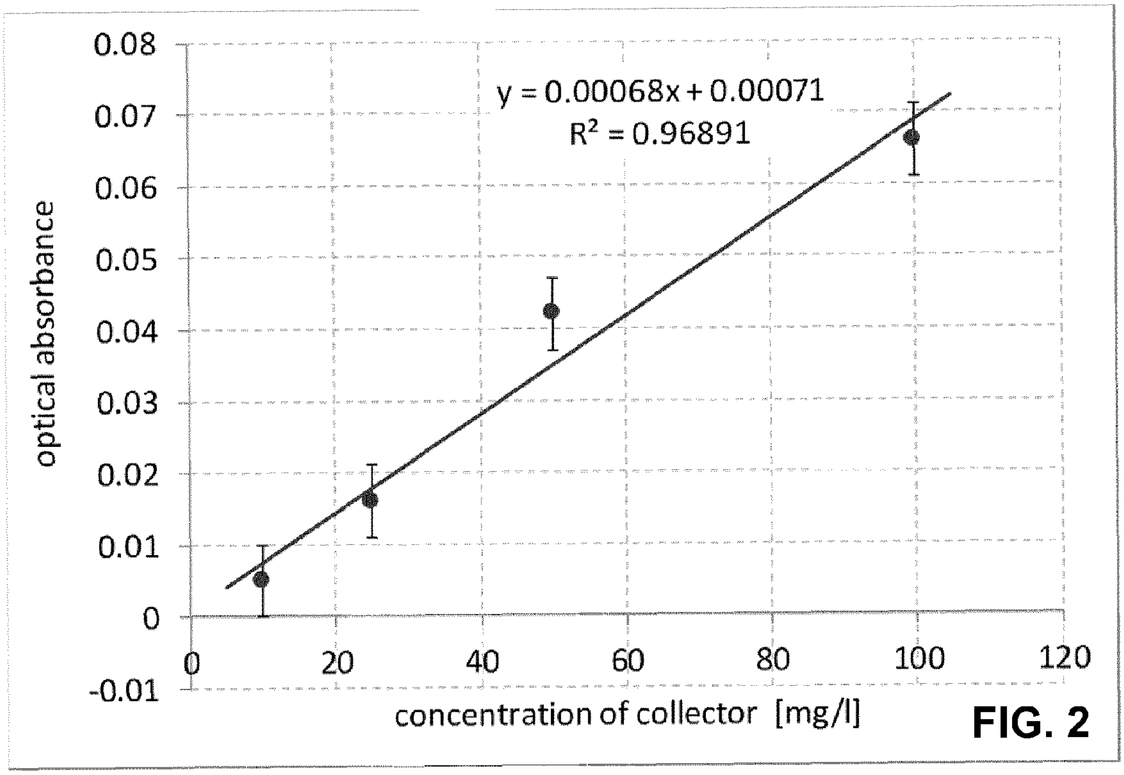

y = 0.00068x + 0.00071
$R^2$ = 0.96891
optical absorbance
0.08
0.07
0.06
0.05
0.04
0.03
0.02
0.01
0
-0.01
0
20
40
60
80
100
120
concentration of collector [mg/l]


FIG. 2

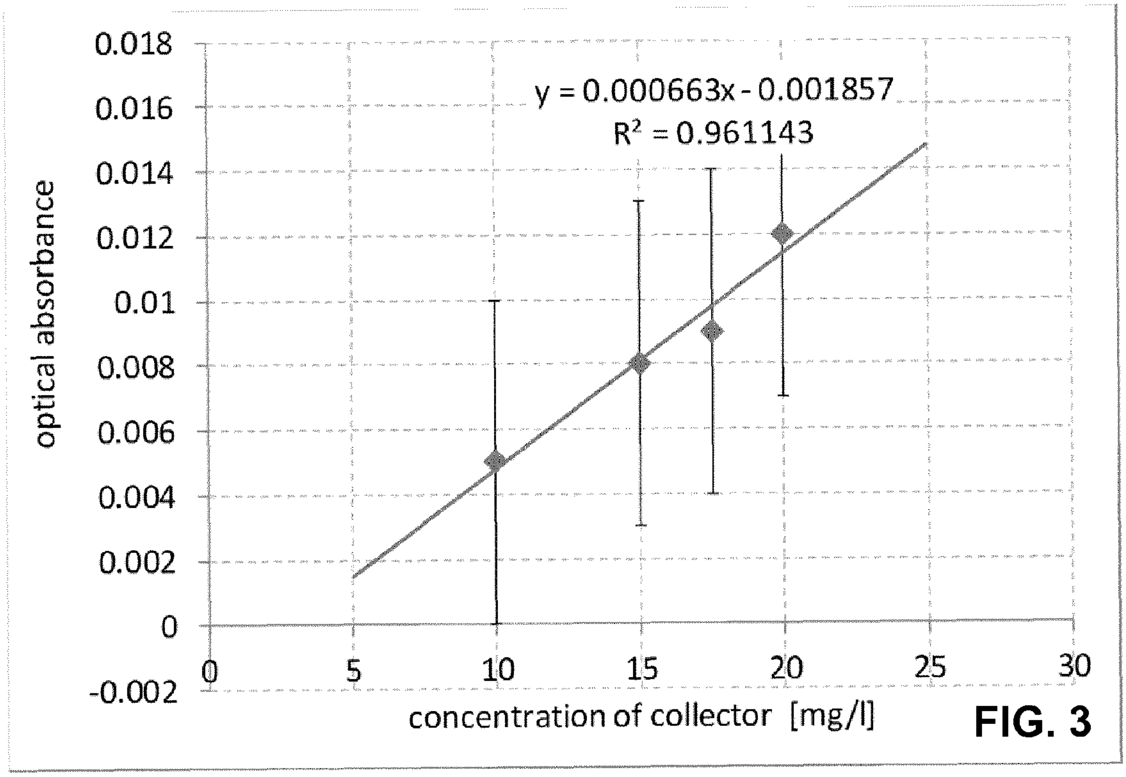

y = 0.000663x - 0.001857
$R^2$ = 0.961143
optical absorbance
0.018
0.016
0.014
0.012
0.01
0.008
0.006
0.004
0.002
0
-0.002
0
5
10
15
20
25
30
concentration of collector [mg/l]


FIG. 3

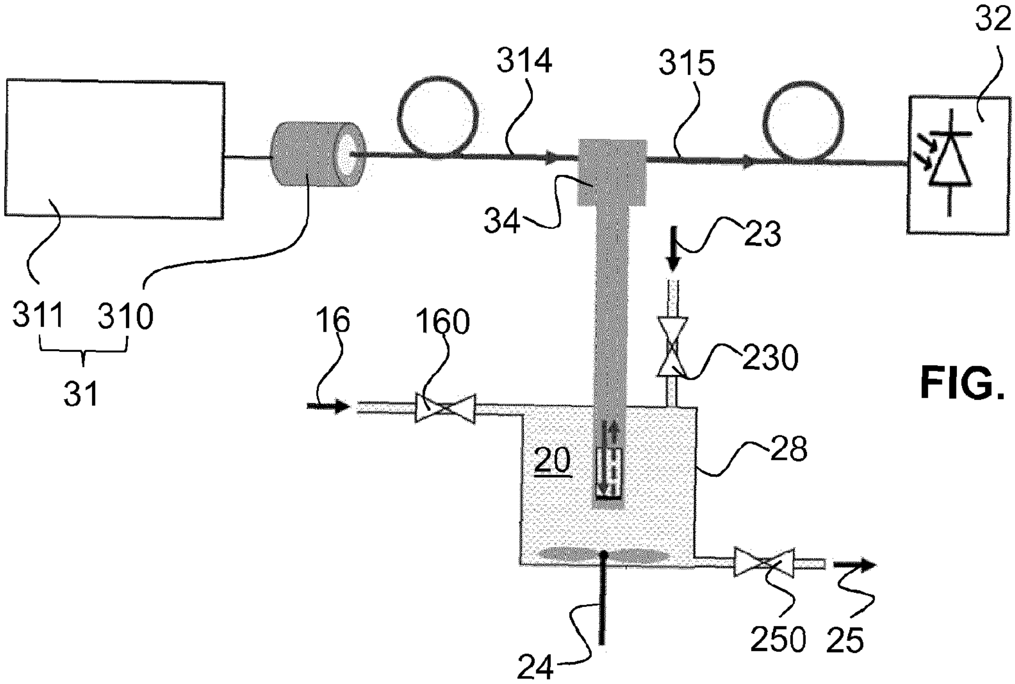

32
314
315
34
23
311
310
31
16
160
230
28
20
24
250
25


FIG. 4

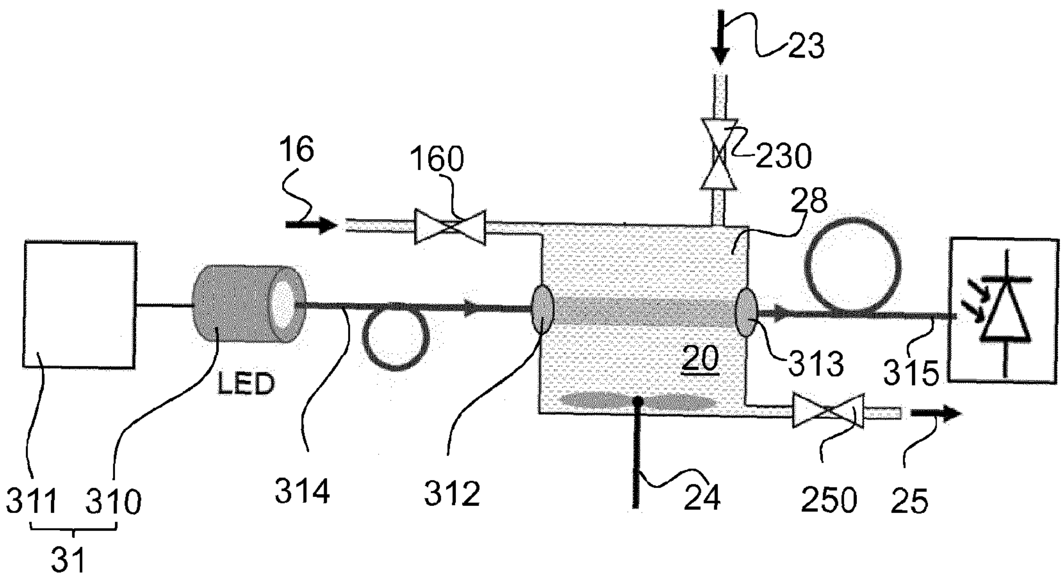

23
16
160
230
28
LED
20
313
315
311
310
31
314
312
24
250
25


FIG. 5

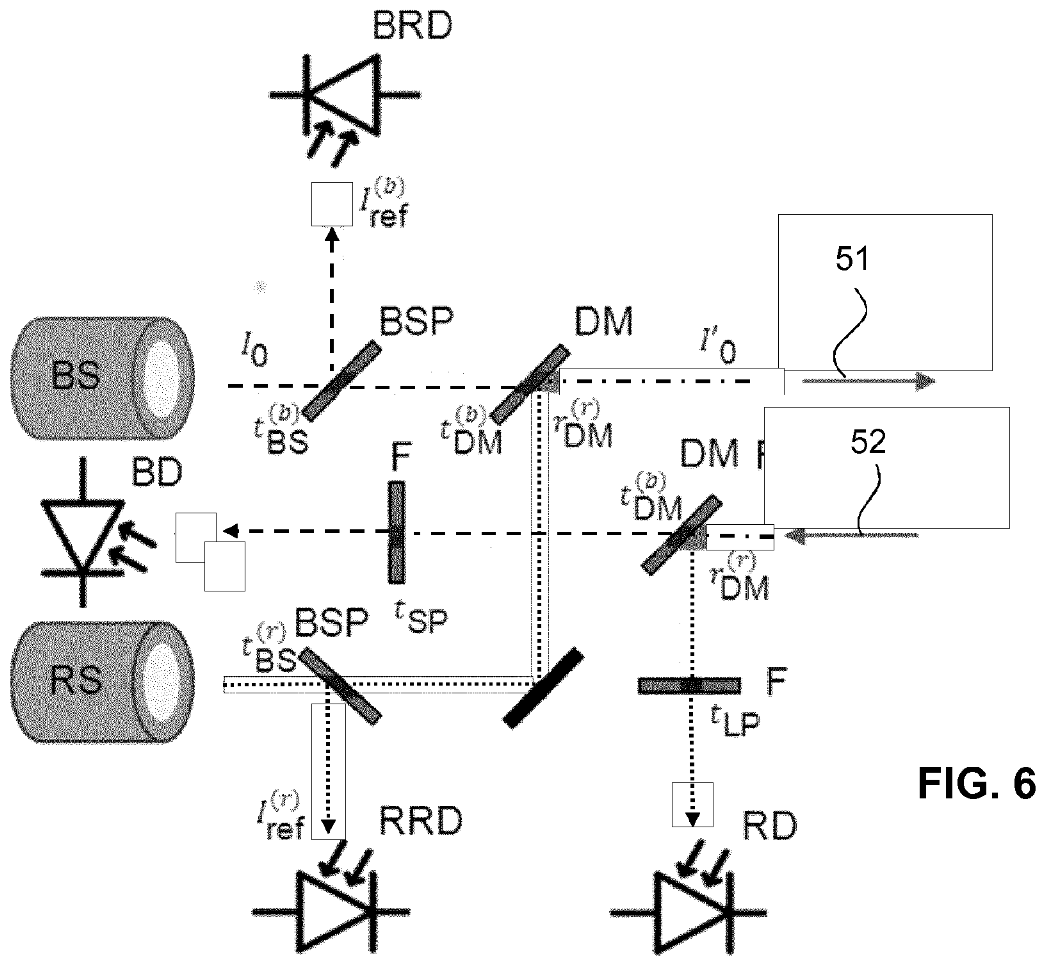
BRD
$I^{(b)}_{ref}$
BS
$I_0$
BSP
DM
$I'_0$
51
$t^{(b)}_{BS}$
$t^{(b)}_{DM}$
$r^{(r)}_{DM}$
BD
F
DM F
52
$t^{(b)}_{DM}$
$r^{(r)}_{DM}$
RS
$t^{(r)}_{BS}$
BSP
$t_{SP}$
F
$t_{LP}$
$I^{(r)}_{ref}$
RRD
RD

FIG. 6

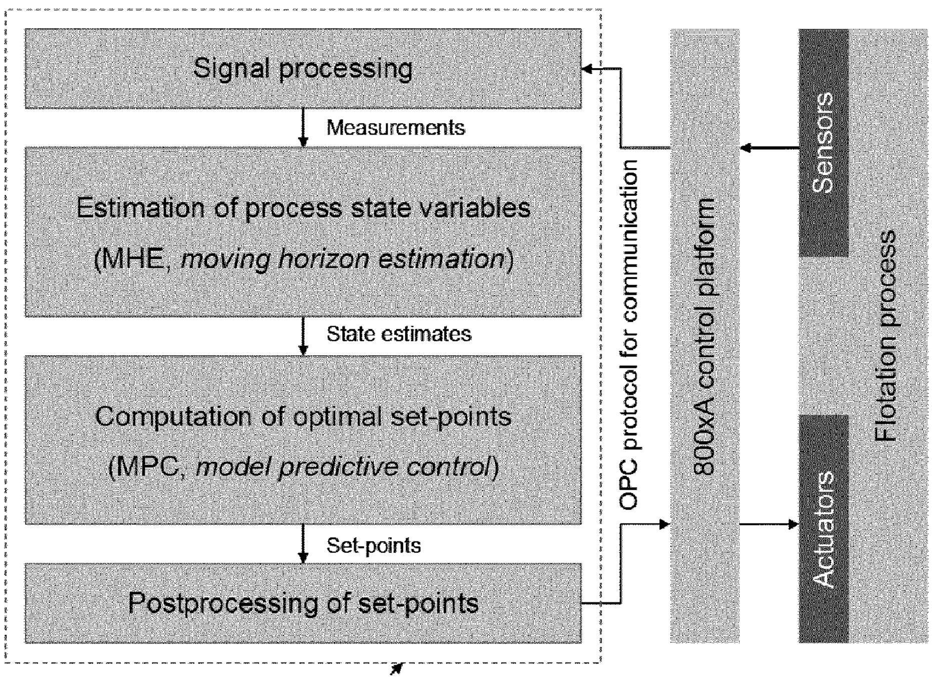
Signal processing
Measurements
Estimation of process state variables
(MHE, moving horizon estimation)
State estimates
Computation of optimal set-points
(MPC, model predictive control)
Set-points
Postprocessing of set-points
OPC protocol for communication
800xA control platform
Sensors
Actuators
Flotation process

FIG. 7

Europäisches Patentamt
European Patent Office
Office européen des brevets

# EUROPEAN SEARCH REPORT

Application Number
EP 14 17 1471

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2009/066167 A2 (UNIV MINAS GERAIS [BR]; UNIV FED DE OURO PRETO UFOP [BR]; YOSHIDA MARI) 28 May 2009 (2009-05-28)<br>* examples 1,3 *<br>----- | 1-15 | INV.<br>B03D1/02<br>G01N21/75<br>G01N21/25 |
| A | US 5 705 394 A (SIVAKUMAR ANANTHASUBRAMANIAN [US] ET AL)<br>6 January 1998 (1998-01-06)<br>* the whole document *<br>----- | 1-15 | |
| | | | TECHNICAL FIELDS SEARCHED (IPC) |
| | | | B03D<br>G01N |

1

The present search report has been drawn up for all claims

| Place of search | Date of completion of the search | Examiner |
|---|---|---|
| Munich | 10 November 2014 | Roider, Josef |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO. EP 14 17 1471

This annex lists the patent family members relating to the patent documents cited in the above-mentioned European search report.
The members are as contained in the European Patent Office EDP file on
The European Patent Office is in no way liable for these particulars which are merely given for the purpose of information.

10-11-2014

| Patent document cited in search report | Publication date | Patent family member(s) | Publication date |
|---|---|---|---|
| WO 2009066167 A2 | 28-05-2009 | BR PI0705593 A2 | 21-07-2009 |
| | | WO 2009066167 A2 | 28-05-2009 |
| US 5705394 A | 06-01-1998 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012110284 A2


### Non-patent literature cited in the description


- **S. GAULOCHER ; E. GALLESTEY ; H. LINDVALL.** Advanced process control of a froth flotation circuit. *V International Mineral Processing Seminar,* 22 October 2008
- **BRADFORD, MM.** A rapid and sensitive method for the quantification of microgram quantities of protein utilizing the principle of protein-dye-binding. *Anal. Biochem.,* 1976, vol. 72, 248-254